(19) Europäisches Patentamt
European Patent Office
Office européen des brevets

(11) **EP 1 956 784 A1**

(12) **EUROPEAN PATENT APPLICATION**

(43) Date of publication:
**13.08.2008 Bulletin 2008/33**

(51) Int Cl.:
**H04L 27/26** (2006.01)   **H04B 17/00** (2006.01)

(21) Application number: **07023824.1**

(22) Date of filing: **10.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **06.02.2007 KR 20070012298**

(71) Applicant: **Samsung Electronics Co., Ltd.**
**Suwon-si, Gyeonggi-do (KR)**

(72) Inventors:
 • **Ko, Seong Yun**
   **Suwon-si,**
   **Gyeonggi-do (KR)**

 • **Kim, Jun Hyuck**
   **Suwon-si,**
   **Gyeonggi-do (KR)**
 • **Youn, Myeon Kee**
   **Suwon-si,**
   **Gyeonggi-do (KR)**
 • **Song, Seong Kyu**
   **Suwon-si,**
   **Gyeonggi-do (KR)**

(74) Representative: **Boakes, Jason Carrington**
**Harrison Goddard Foote**
**106 Micklegate**
**York, YO1 6JX (GB)**

(54) **Mobile terminal and method for measuring channel quality**

(57)    An Orthogonal Frequency Division Multiple Access (OFDMA)-based mobile terminal and a method for measuring reception channel quality for use in the OFDMA-based mobile terminal are provided. A mobile terminal includes a transceiver for exchanging frequency signal with a base station and a control unit for calculating a Carrier-to-Interference and Noise Ratio (CINR) of a data subcarrier with a second preamble of a downlink frame received through the transceiver. A mobile terminal and a method for measuring a channel quality for the mobile terminal enable calculating a CINR of data subcarriers using information contained in a second preamble that is provided in a downlink frame proposed.

**FIG. 2**

**Description**

## BACKGROUND OF THE INVENTION

### 1. Field of the Invention

The present invention relates to a mobile terminal and, in particular, to an Orthogonal Frequency Division Multiple Access (OFDMA)-based mobile terminal and a method for measuring reception channel quality for use in the OFDMA-based mobile terminal.

### 2. Description of the Related Art

Orthogonal Frequency Division Multiplexing (OFDM) is a multicarrier modulation scheme, which uses a large number of closely-spaced orthogonal subcarriers. The orthogonality of the subcarriers results in zero cross-talk. The subcarriers are so close that their spectra overlap, and thus OFDM has high spectral efficiency relative to a Frequency Division Multiplexing (FDM).

Since an OFDM symbol length is longer than an impulse response of a channel, it is robust to multipath fading effect. Also, the extended symbol length makes the OFDM suitable for high speed data transmission.

OFDM system is composed of an OFDM transmitter and an OFDM receiver. The OFDM transmitter generates an OFDM symbol with raw data and transmits the OFDM symbol on a radio frequency, and the OFDM receiver recovers the raw data from the received OFDM symbol.

Since the OFDM enables transmitting the data over individual subcarriers, OFDM can be adapted for multiple access. Orthogonal Frequency Division Multiple Access (OFDMA) is a multiple access scheme and is a multi-user version of the OFDM scheme.

Since the channel conditions of mobile terminals are time-varying, a base station selects one of preset Modulation and Coding Scheme (MCS) levels according to a Carrier-to-Interference and Noise Ratio (CINR) transmitted from the mobile terminals. The MCS level is determined through a link adaptation process and a DownLink (DL) Adaptive Modulation and Coding (AMC) scheme is used for effective downlink data transfer. In order to perform the DL AMC, the mobile terminal measures reception CINR and transmits the CINR to the base station.

In conventional mobile communication systems, a mobile terminal measures the reception CINR by measuring an offset of a pilot signal in a constellation graph under an assumption that a pilot subcarrier and its contiguous data subcarriers have similar characteristics and their CINRs are identical to each other.

However, such assumption can be only allowed when a gap between the pilot subcarrier and the data subcarrier is smaller than a coherent bandwidth. Also, the coherent bandwidths of channels of sectors or cells, in an OFDMA system, are not regular such that, in some cases, channel characteristics of the data subcarrier and the adjacent pilot subcarrier become considerably different form each other, whereby accurate DL AMC cannot be expected. For example, if the CINR of the data subcarrier is lower than the CINR measured on the pilot subcarrier, the mobile terminal cannot perform demodulation with the AMC level used in the base station.

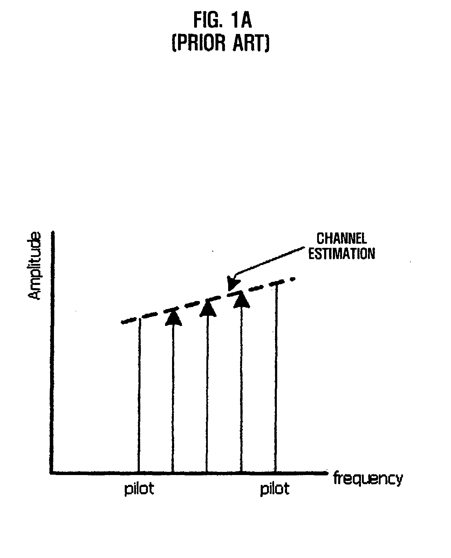

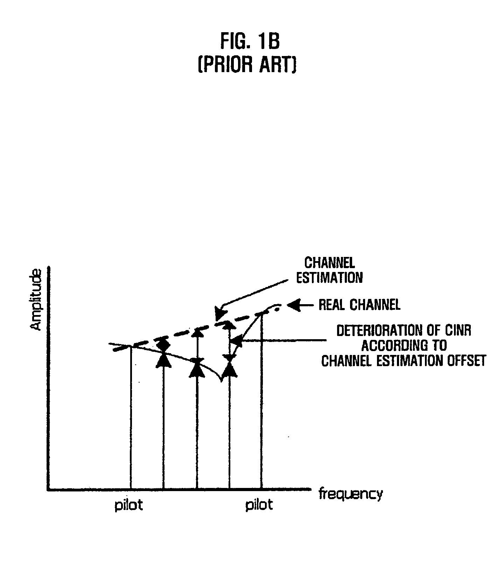

FIGS. 1A and 1B are graphs illustrating channel spectra in a conventional mobile communication system.

As shown in FIG. 1A, if a coherent bandwidth of a channel is larger than a space between pilot subcarriers, a data subcarrier adjacent to a pilot subcarrier will have similar characteristics to that of the pilot subcarrier.

In contrast, if the coherent bandwidth of the channel is smaller than the space between pilot subcarriers, a corelation between the pilot subcarrier and the adjacent data subcarrier is weakened as shown in FIG. 1B. In this case, there can be a considerable difference between the CINR measured on the pilot subcarrier and the real CINR of the data subcarrier, whereby accuracy of the DL AMC becomes unreliable, resulting in reduction of system throughput.

That is, the conventional channel quality measurement method for an OFDMA system has a drawback in that the channel quality is estimated by measuring CINR of pilot subcarrier of which channel characteristic may differ from that of the data subcarrier, whereby the DL AMC is unreliable, resulting in reduction of system throughput.

## SUMMARY OF THE INVENTION

The present invention has been made in an effort to solve the above problems, and it is an object of the present invention to provide a mobile terminal and method for measuring channel quality for use in the mobile terminal that are capable of improving accuracy of channel quality measurement.

It is another object of the present invention to provide a mobile terminal and method for measuring channel quality for use in the mobile terminal that are capable of improving downlink throughput.

It is another object of the present invention to provide a mobile terminal and method for measuring channel quality for use in the mobile terminal that are capable of obtaining a channel quality by directly measuring CINR of a data subcarrier.

It is another object of the present invention to provide a mobile terminal and method for measuring channel quality for use in the mobile terminal that are capable of improving channel quality measurement performance of the mobile terminal using a novel downlink frame format.

In accordance with an aspect of the present invention, the above and other objects are accomplished by a mobile terminal. The mobile terminal includes a transceiver for exchanging frequency signal with a base station; and a control unit for calculating a Carrier-to-Interference and Noise Ratio (CINR) of a data subcarrier with a second preamble of a downlink frame received through the transceiver.

In accordance with another aspect of the present invention, the above and other objects are accomplished by a channel status estimation method for a mobile terminal. The channel status estimation method includes calculating an average offset of data subcarriers on a basis of a second preamble of a downlink frame; and calculating a CINR of the data subcarriers using the average offset.

In accordance with another aspect of the present invention, the above and other objects are accomplished by a channel status estimation method for an Orthogonal Frequency Division Multiple Access (OFDMA) communication system using a downlink frame including a first preamble for performing a frame synchronization and a frequency offset estimation, a second preamble carrying expected transmission values of pilot and data subcarriers for performing channel estimation and calculating CINR of the data subcarriers, and a data zone for carrying data. The channel status estimation method includes performing, if the first preamble is received, the frame synchronization and the frequency offset estimation; calculating, if the second preamble is received, an average offset of the data subcarriers; and calculating, if the data zone is received, the CINR of the data subcarriers.

## BRIEF DESCRIPTION OF THE DRAWINGS

The above and other objects, features and advantages of the present invention will be more apparent from the following detailed description in conjunction with the accompanying drawings, in which:

FIGS. 1A and 1B are graphs illustrating channel spectra in a conventional mobile communication system;
FIG. 2 is a block diagram illustrating a configuration of a mobile terminal according to an exemplary embodiment of the present invention;
FIG. 3 is a diagram illustrating a frame format of a downlink frame for use in a channel quality measurement method according to an exemplary embodiment of the present invention;
FIG. 4 is a flowchart illustrating a method for measuring channel quality according to an exemplary embodiment of the present invention; and
FIG. 5 is a flowchart illustrating a method for measuring channel quality according to another exemplary embodiment of the present invention.

## DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

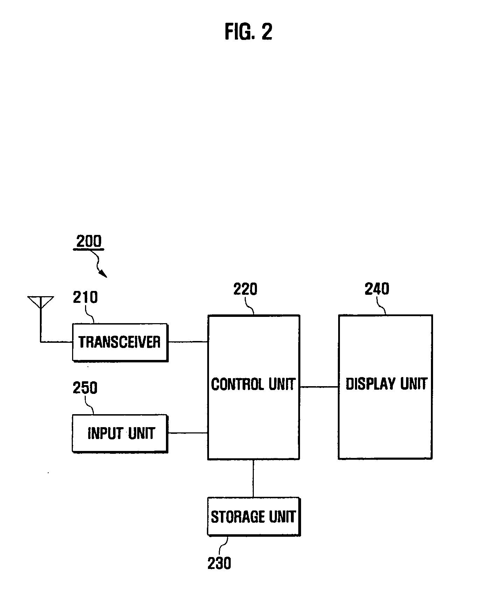

FIG. 2 is a block diagram illustrating a configuration of a mobile terminal according an exemplary embodiment of the present invention.

Referring to FIG. 2, a mobile terminal 200 includes a transceiver 210 for exchanging radio signal with a base station and a control unit 220 for estimating CINR of a data subcarrier using a preamble of a downlink frame.

The base station is preferably an Orthogonal Frequency Division Multiple Access (OFDMA)-powered base station.

The control unit 220 calculates a CINR of a data subcarrier using a preamble of a downlink frame.

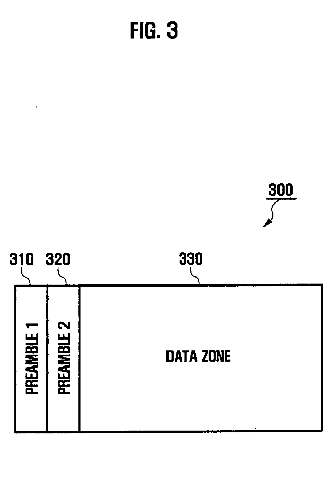

FIG. 3 is a diagram illustrating a frame format of a downlink frame for user in a channel quality measurement method according to an exemplary embodiment of the present invention.

In this embodiment, an additional preamble is provided in addition to a preamble of the conventional downlink frame.

As shown in FIG. 3, a downlink frame 300 includes a first preamble 310 for frame synchronization and frequency offset estimation, a second preamble 320 for channel estimation and CINR calculation of a data frame, and a data zone for carrying data 330.

The first and second preambles 310 and 320 include their respective Pseudo Noise (PN) codes ($P_k$). The second preamble 320 contains additional information that is not provided by the first preamble 310 such that the mobile terminal 200 can calculate the CINR of the data subcarrier.

For example, if a PN code set is {-1, 1, 1, 1, -1, 1, 1, 1, 1, -1,...} and the PN code of the first preamble 310 is {-1, 0, 0, 1, 0, 0, 1, 0, 0, -1, ...}, a PN code of the second preamble 320 is determined in accordance with the PN code set {-1, 1, 1, 1, -1, 1, 1, 1, 1, -1,...} so as to vacant values of the PN code of the first preamble 310. That is, the second preamble 320 carries the expected values for all the pilot and data subcarriers. Preferably, a PN code $P_k$ is a complex number.

In order to simplify the explanation, the PN code of a data subcarrier is called $D_k$ and the PN code of a pilot subcarrier is called $H_k$. $D_k$ means a transmission value designated at a position of the data subcarrier and $H_k$ means a channel estimation value of a $k_{th}$ subcarrier.

The data zone 330 contains the data to be transmitted, i.e. pilot and data subcarriers.

The CINR of the data subcarrier is calculated according to the following Equation (1).

$$CINR = \frac{C}{N + I + offset.\text{deg}} \qquad (1)$$

wherein C is a power level of a received signal, I is a interference level of the received level, and N is a noise level of the received signal. The values of C, N, and I can be calculated in accordance with the first preamble 310 or the second preamble 320. The values of C, N, and I can be calculated with the pilot signal in the data zone 330. That is, C is a power level in the preamble or pilot signal duration, N is a noise level in the preamble or in the pilot signal duration, and I is an interference level in the preamble or the pilot signal duration.

The value offset.deg is an average offset of the data subcarriers and means a difference between an estimated CINR and a real CINR of the data subcarrier, i.e. a valued deteriorated by the channel estimation error.

The average offset of the data subcarriers (offset.deg) is calculated according to the following Equation (2).

$$offset.\text{deg} = E[offset.\text{deg}_k] \qquad (2)$$

That is, the average offset (offset.deg) of the data subcarriers is a mean value of the offsets (offset.deg$_k$) of the data subcarriers. The offset (offset.deg$_k$) of each data subcarrier can be calculated according to the following Equation (3).

$$offset.\text{deg}_k = \left| \frac{D_{k,rx} \cdot H_k^*}{|H_k|^2} - D_{k,tx} \right|^2 \qquad (3)$$

where $H_k$ is a channel estimation value of $k_{th}$ subcarrier, and $D_{k,tx}$ is a transmission value of the $k_{th}$ data subcarrier at a transmitter, i.e. the PN code value ($P_k$) transmitted by the transmitter. $D_{k,rx}$ is a transmission value of the $k_{th}$ data subcarrier measured at the receiver, i.e. the distorted transmission value received by the mobile terminal 200. k is a subcarrier index.

In Equation (3), the offset of $k_{th}$ data subcarrier is obtained by calculating a difference between the transmission value and the received transmission value after being compensated.

The $H_k$, $D_{k,rx}$, and $D_{m,tx}$ can be calculated on a basis of the second preamble 320 of the downlink frame 300.

After the CINR of the data subcarrier is calculated, the control unit 220 transmits the CINR value to the base station through the transceiver 210. If the CINR value is received, the base station performs power control on a basis of the channel quality represented by the CINR value.

The mobile terminal 200 further includes a storage unit 230 for storing data, a display unit 240 for providing operation screens, and an input unit 250 for receiving user input.

The mobile terminal 200 can include at least one of a slot for inserting an external storage medium such as a memory card, a camera module, a broadcast receiver module, an audio output means such as a speaker, an sound input means such as a microphone, a connection port for enabling data exchange with another external digital device, a charging port, and a digital audio player such as an MP3 module. Although all the digital devices that can be converged in the mobile handset are not described, other digital modules that can be connected to the mobile handset and their equivalent can be integrated into the mobile handset.

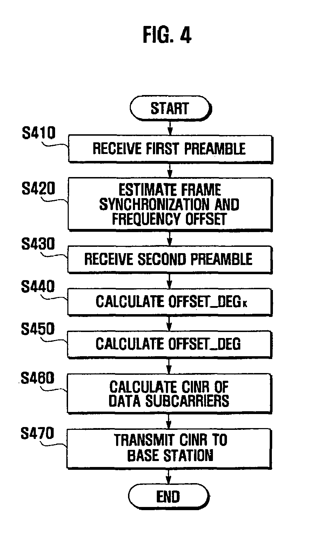

FIG. 4 is a flowchart illustrating a method for measuring channel quality according to an exemplary embodiment of the present invention.

In this embodiment, an average offset (offset.deg) of data subcarriers is calculated using a second preamble 320 of a downlink frame 300, and then a CINR of a data subcarrier is estimated on a basis of the average offset.

The channel quality measurement method can include performing frame synchronization and estimating frequency offset using a first preamble 310 of a frame.

Referring to FIG. 4, a first preamble 310 of a downlink frame 300 is received, in Step S410, and the mobile terminal 200 performs frame synchronization and estimates a frequency offset on a basis of information contained in the first preamble 310, in Step S420.

Next, the mobile terminal 200 receives a second preamble 320 of the downlink frame 300, in Step S430, and then calculates an offset of each data subcarrier (offset.deg$_k$) on a basis of information contained in the second preamble 320 in accordance with equation (3), in Step S440. Next, the mobile terminal 200 calculates an average offset (offset.deg) of the data subcarriers in accordance with equation (2), in Step S450, and then calculates a CINR of the data subcarriers using the average offset of the subcarriers, a power level (C), a noise level (N), and an interference level (I) in accordance with equation (1), in Step S460. Consequently, the mobile terminal 200 transmits the calculated CINR to a base station.

Accordingly, the base station can estimate the channel quality on a basis of the CINR received from the mobile terminal 200 and perform power control on the basis of the channel quality.

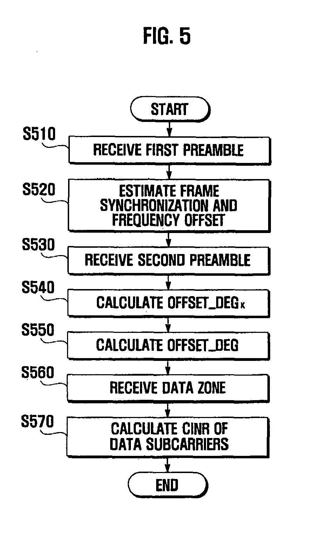

FIG. 5 is a flowchart illustrating a method for measuring channel quality according to another exemplary embodiment of the present invention.

In this embodiment, a frame includes a first preamble 310 for frame synchronization and frequency offset estimation, a second preamble 320 carrying transmission values of pilot and data subcarriers for estimating a channel and calculating a CINR of the data subcarrier, and a data zone 330 carrying a payload.

The mobile terminal 200 performs frame synchronization and estimates a frequency offset on the basis of information contained in the first preamble 310, and calculates an average offset of data subcarriers on the basis of the information contained in the second preamble 320, and calculates a CINR of the data subcarriers of the data zone 330 on the basis of the average offset.

Referring to FIG. 5, the mobile terminal 200 receives a first preamble 310 of a frame, in Step S510, and performs frame synchronization and estimates a frequency offset of the basis of information contained in the first preamble 310, in Step S520.

Next, the mobile terminal 200 receives a second preamble 320 from the frame 300, in Step S530, and then calculates an offset of each data subcarrier (offset.deg$_k$) on the basis of information contained in the second preamble 320 in accordance with equation (3), in Step S540. Next, the mobile terminal 200 calculates an average offset (offset.deg) of the data subcarriers in accordance with equation (2), in Step S550. Next, the mobile terminal 200 receives a data zone 330 of the frame 300, in Step S560, and then calculates a CINR of the data subcarrier using the average offset of the subcarriers, a power level (C), a Noise level (N), and an Interference level (I) in accordance with equation (1), in Step S570.

As described above, a mobile terminal and a method for measuring a channel quality for the mobile terminal enable calculating a CINR of data subcarriers using information contained in a second preamble that is provided in a downlink frame proposed in the present invention, whereby the mobile terminal can provide a base station with more reliable channel quality information, resulting in avoiding degradation of communication quality and improvement of system throughput.

Although exemplary embodiments of the present invention are described in detail hereinabove, it should be clearly understood that many variations and/or modifications of the basic inventive concepts herein taught which may appear to those skilled in the present art will still fall within the spirit and scope of the present invention, as defined in the appended claims.

## Claims

1.   A mobile terminal comprising:

   a transceiver for exchanging frequency signal with a base station; and
   a control unit for calculating a Carrier-to-Interference and Noise Ratio (CINR) of a data subcarrier of a downlink frame received through the transceiver.

2.   The mobile terminal of claim 1, wherein the base station is an Orthogonal Frequency Division Multiple Access-based (OFDMA-based) base station.

3. The mobile terminal of claim 1, wherein the downlink frame comprises:

   a first preamble for performing a frame synchronization and a frequency offset estimation;
   a second preamble for performing channel estimation and calculating the CINR of the data subcarrier; and
   a data zone for carrying data.

4. The mobile terminal of claim 3, wherein the second preamble contains a Pseudo Noise (PN) code value ($P_k$) excluded in a PN code contained within the first preamble in accordance with a PN code set.

5. The mobile terminal of claim 4, wherein the PN code value ($P_k$) is a transmission value ($D_k$) of a $k_{th}$ data subcarrier.

6. The mobile terminal of claim 4, wherein the PN code value ($P_k$) is a channel estimation value ($H_k$) of a kth pilot subcarrier.

7. The mobile terminal of claim 1, wherein the control unit calculates a CINR of a data subcarrier according to :

$$CINR = \frac{C}{N + I + offset.\deg} ,$$

   wherein C is a power level of a received signal, I is a interference level of the received level, and N is a noise level of the received signal, and *offset*.deg is an average offset of the data subcarrier.

8. The mobile terminal of claim 7, wherein the average offset (offset.deg) of data subcarriers are calculated by :

$$offset.deg = E[offset.deg_k] ,$$

   wherein offset.deg$_k$ is an offset of $k_{th}$ data subcarrier.

9. The mobile terminal of claim 8, wherein the offset of the $k_{th}$ data subcarrier is calculated by an equation:

$$offset.deg_k = \left| \frac{D_{k,rx} \cdot H_k^*}{|H_k|^2} - D_{k,tx} \right|^2$$

   wherein $H_k$ is a channel estimation value of $k_{th}$ subcarrier, and $D_{k,tx}$ is a transmission value of the $k_{th}$ data subcarrier at a transmitter, $D_{k,rx}$ is a transmission value of the $k_{th}$ data subcarrier measured at the receiver, and k is a subcarrier index.

10. The mobile terminal of claim 1, wherein the control unit transmits the CINR to the base station.

11. The mobile terminal of claim 1, wherein the control unit controls transmission power and modulation adaptive to the calculated CINR.

12. A channel status estimation method for a mobile terminal, comprising:

    calculating an average offset of data subcarriers on a basis of a downlink frame; and
    calculating a CINR of the data subcarriers using the average offset.

13. The channel status estimation method of claim 12, wherein the downlink frame comprises:

    a first preamble for performing a frame synchronization and a frequency offset estimation;

a second preamble for performing channel estimation and calculating the CINR of the data subcarrier; and
a data zone for carrying data.

14. The channel status estimation method of claim 13, wherein the average offset of the data subcarriers is calculated by an equation:

$$offset.deg = E[offset.deg_k],$$

wherein offset.deg$_k$ is an offset of $k_{th}$ data subcarrier.

15. The channel status estimation method of claim 14, wherein the offset of $k_{th}$ data subcarrier is calculated by an equation:

$$offset.deg_k = \left| \frac{D_{k,rx} \cdot H_k^*}{|H_k|^2} - D_{k,tx} \right|^2$$

wherein $H_k$ is a channel estimation value of $k_{th}$ subcarrier, and $D_{k,tx}$ is a transmission value of the $k_{th}$ data subcarrier at a transmitter, $D_{k,rx}$ is a transmission value of the $k_{th}$ data subcarrier measured at the receiver, k is a subcarrier index.

16. The channel status estimation method of claim 15, wherein the CINR of the data subcarriers is calculated by :

$$CINR = \frac{C}{N + I + offset.\text{deg}},$$

wherein C is a power level of a received signal, I is an interference level of the received level, and N is a noise level of the received signal.

17. The channel status estimation method of claim 13, further comprising performing, if the first preamble is received, a frame synchronization and a frequency offset estimation.

18. The channel status estimation method of claim 12, further comprising transmitting the calculated CINR to a base station.

19. A channel status estimation method for an Orthogonal Frequency Division Multiple Access (OFDMA) communication system using a downlink frame including a first preamble for performing a frame synchronization and a frequency offset estimation, a second preamble carrying expected transmission values of pilot and data subcarriers for performing channel estimation and calculating CINR of the data subcarriers, and a data zone for carrying data, comprising:

performing, if the first preamble is received, the frame synchronization and the frequency offset estimation;
calculating, if the second preamble is received, an average offset of the data subcarriers; and
calculating, if the data zone is received, the CINR of the data subcarriers.

20. The channel status estimation method of claim 19, wherein average offset (offset.deg) of the subcarriers is calculated by :

$$offset.deg = E[offset.deg_k],$$

wherein offset.deg$_k$ is an offset of a $k_{th}$ data subcarrier.

**21.** The channel status estimation method of claim 20, wherein the offset of the $k_{th}$ data subcarrier is calculated by :

$$offset.deg_k = \left| \frac{D_{k,rx} \cdot H_k^*}{|H_k|^2} - D_{k,tx} \right|^2$$

wherein $H_k$ is a channel estimation value of $k_{th}$ subcarrier, and $D_{k,tx}$ is a transmission value of the $k_{th}$ data subcarrier at a transmitter, $D_{k,rx}$ is a transmission value of the $k_{th}$ data subcarrier measured at the receiver, and k is a subcarrier index.

**22.** The channel estimation method of claim 21, wherein the CINR of the data subcarriers is calculated by :

$$CINR = \frac{C}{N + I + offset.deg},$$

wherein C is a power level of a received signal, I is a interference level of the received level, and N is a noise level of the received signal.

# FIG. 1A
## (PRIOR ART)

# FIG. 1B
# (PRIOR ART)

CHANNEL
ESTIMATION

REAL CHANNEL

DETERIORATION OF CINR
ACCORDING TO
CHANNEL ESTIMATION OFFSET

Amplitude

frequency

pilot          pilot

# FIG. 2

## FIG. 3

300

310  320          330

| PREAMBLE 1 | PREAMBLE 2 | DATA ZONE |

## FIG. 4

```
                    ( START )
S410      RECEIVE FIRST PREAMBLE

S420      ESTIMATE FRAME
          SYNCHRONIZATION AND
          FREQUENCY OFFSET

S430      RECEIVE SECOND PREAMBLE

S440      CALCULATE OFFSET_DEGₖ

S450      CALCULATE OFFSET_DEG

S460      CALCULATE CINR OF
          DATA SUBCARRIERS

S470      TRANSMIT CINR TO
          BASE STATION

                    ( END )
```

## FIG. 5

START

S510 → RECEIVE FIRST PREAMBLE

S520 → ESTIMATE FRAME
SYNCHRONIZATION AND
FREQUENCY OFFSET

S530 → RECEIVE SECOND PREAMBLE

S540 → CALCULATE OFFSET_DEG$_K$

S550 → CALCULATE OFFSET_DEG

S560 → RECEIVE DATA ZONE

S570 → CALCULATE CINR OF
DATA SUBCARRIERS

END

**European Patent Office**

**EUROPEAN SEARCH REPORT**

Application Number

EP 07 02 3824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 100 668 662 B1 (KOREA ELECTRONICS TELECOMM [KR]; KT CORP [KR]; SK TELECOM CO LTD [KR];) 8 January 2007 (2007-01-08) | 1,2, 7-12,18 | INV. H04L27/26 H04B17/00 |
| A | | 3-6, 13-17, 19-22 | |
| | & WO 2007/021159 A (SAMSUNG ELECTRONICS CO LTD [KR]; KOREA ELECTRONICS TELECOMM [KR]; SK T) 22 February 2007 (2007-02-22) * page 1 - page 4 * * page 14 - page 17 * * page 19 * * claims 1-27 * * figures 1-3 * * figures 5,7,8,10-13 * | | |
| X | US 2006/133260 A1 (KIM YOUNG-HOON [KR] ET AL) 22 June 2006 (2006-06-22) * figures 1-3 * | 1,2, 7-12,18 | |
| A | | 3-6, 13-17, 19-22 | |
| | * page 2 - page 4 * | | TECHNICAL FIELDS SEARCHED (IPC) H04L H04B |

The present search report has been drawn up for all claims

| Place of search | Date of completion of the search | Examiner |
|---|---|---|
| Berlin | 12 June 2008 | González Gutiérrez |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...............................................................................

& : member of the same patent family, corresponding
   document

EPO FORM 1503 03.82 (P04C01)

**EP 1 956 784 A1**

## ANNEX TO THE EUROPEAN SEARCH REPORT
## ON EUROPEAN PATENT APPLICATION NO.

EP 07 02 3824

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2008

| Patent document cited in search report | | Publication date | Patent family member(s) | | Publication date |
|---|---|---|---|---|---|
| KR 100668662 | B1 | 08-01-2007 | NONE | | |
| WO 2007021159 | A | 22-02-2007 | NONE | | |
| US 2006133260 | A1 | 22-06-2006 | KR 20060070815 A | | 26-06-2006 |

EPO FORM P0459

For more details about this annex : see Official Journal of the European Patent Office, No. 12/82

16